# EUROPEAN PATENT APPLICATION

(11) **EP 4 474 487 A1**
(43) Date of publication of application: **11.12.2024**
(21) Application number: 23766677.1
(22) Date of filing: 01.03.2023
(51) Int. Cl.: C21B 5/00, C21B 7/24

(54) **METHOD FOR PREDICTING MOLTEN IRON TEMPERATURE IN BLAST FURNACE, METHOD FOR TRAINING MOLTEN IRON TEMPERATURE PREDICTION MODEL FOR BLAST FURNACE, METHOD FOR OPERATING BLAST FURNACE, MOLTEN IRON TEMPERATURE PREDICTION DEVICE FOR BLAST FURNACE, MOLTEN IRON TEMPERATURE PREDICTION SYSTEM, AND TERMINAL DEVICE**

(30) Priority: 07.03.2022 JP 2022034139
(71) Applicant: JFE Steel Corporation, Tokyo 100-0011 (JP)
(72) Inventor: MASUDA, Ryosuke, Tokyo 100-0011 (JP); HASHIMOTO, Yoshinari, Tokyo 100-0011 (JP); SHIMAMOTO, Hiroyuki, Tokyo 100-0011 (JP)
(74) Representative: Hoffmann Eitle
(86) International application number: PCT/JP2023/007608
(87) International publication number: WO 2023/171501

(57) **Abstract**

A molten iron temperature prediction method for a blast furnace is a molten iron temperature prediction method for a blast furnace executed by a device configured by a computer, the method including: an image conversion processing step of converting temperature data of a furnace body into a two-dimensional image by an image conversion processing unit included in the computer; and a molten iron temperature prediction processing step of outputting, by a molten iron temperature prediction processing unit included in the computer, a future molten iron temperature by inputting image data output in the image conversion processing step for current temperature data of the furnace body to a molten iron temperature prediction model of which learning is performed using image data output in the image conversion processing step as input data and a molten iron temperature as output data.

## Description

### Field

The present invention relates to a molten iron temperature prediction method for a blast furnace, a learning method of a molten iron temperature prediction model for a blast furnace, an operation method for a blast furnace, a molten iron temperature prediction device for a blast furnace, a molten iron temperature prediction system, and a terminal device.

### Background

In the blast furnace process, the operation is performed in such a manner that the molten iron temperature, the air permeability, and the iron making speed are constant. In order to achieve highly efficient and stable blast furnace operation, control of the molten iron temperature is important. When the molten iron temperature significantly decreases, the temperature of the slag as a by-product also decreases, whereby the viscosity of the slag increases. In some cases, a furnace cooling incident occurs in which molten iron or slag in a lower part of the furnace is solidified, which leads to a long-term operation stop.

On the other hand, in a case where the molten iron temperature is high, it means that pulverized coal or coke as a fuel is excessively consumed, which leads to an increase in the reducing agent ratio. In recent blast furnace operations, a low reducing agent ratio and a low coke ratio are aimed at for CO₂ reduction and molten iron cost reduction, and there is a great need to reduce dispersion in the molten iron temperature.

An operator of a blast furnace predicts a future molten iron temperature based on operating conditions and various types of sensor information and operates the coke ratio, the blowing moisture content, the blowing temperature, and the pulverized coal flow rate. Since a blast furnace is a process having a large heat capacity, there is a large delay until the molten iron temperature changes when an operation variable is changed. Therefore, the influence of a past operation cannot be accurately predicted, and the operation tends to be excessive. As a result, it is periodically repeated that the molten iron temperature is in excess and in short with respect to a target value, which disadvantageously increases the dispersion in the molten iron temperature.

From such a background, a molten iron temperature control method based on a physical model (see Patent Literature 1) and a molten iron temperature control method based on a statistical model (see Patent Literature 2) are proposed. For example, in Patent Literature 1, the following method is proposed in order to compensate an error between a calculated value and an actual measured value of at least one of the reducing agent ratio, the solution loss carbon amount, the iron making speed and the gas utilization rate.

That is, in Patent Literature 1, a prediction value of the molten iron temperature is calculated using a physical model on the premise that the current operation amount is maintained while a gas reduction equilibrium parameter in the physical model or a parameter of the coke ratio at the furnace top is adjusted. Then, the molten iron temperature is controlled based on the calculated prediction value.

In addition, Patent Literature 2 proposes a method of extracting operational data similar to current operating conditions from past operational data, calculating a prediction value of a molten iron temperature based on the extracted operational data, and controlling the molten iron temperature based on the calculated prediction value.

### Citation List

### Patent Literature

Patent Literature 1: JP 2018-24935 A
Patent Literature 2: JP 2007-4728 A

### Summary

### Technical Problem

However, in the method proposed in Patent Literature 1, the prediction accuracy of the molten iron temperature decreases in a case where a disturbance that is difficult to measure and is difficult to reflect in a physical model occurs, such as fluctuation in unloading (falling speed of the raw material) or fluctuation in iron content in ore as a raw material. Therefore, as a result, there is a possibility that the control accuracy of the molten iron temperature decreases.

In addition, in the method described in Patent Literature 2, in a case where the current operating conditions have no precedents, the prediction accuracy of the molten iron temperature decreases, and as a result, the control accuracy of the molten iron temperature may decrease.

Meanwhile, the operator determines whether the furnace condition, including the fluctuation in the molten iron temperature, is good or poor depending on the level of the temperature measured by thermometers installed in the body of the blast furnace and the degree of dispersion in the temperature in the circumferential direction. For example, a tuyere-embedded temperature, which is measured in a thermocouple embedded in a tuyere of the blast furnace, is affected by radiation from a coke filling layer or molten iron in the furnace and therefore tends to change faster than the molten iron temperature does.

Meanwhile, a temperature measured in the thermocouple installed in a protruding manner into the furnace from the furnace wall right above a stock line of the blast furnace is referred to as a skin flow temperature. An increase in the skin flow temperature means that the gas temperature in the vicinity of the furnace wall has increased, which indicates that the peripheral flow of gas in the furnace has increased. That is, a rise in the skin flow temperature causes air permeability to be deteriorated, and a reduction failure of iron ore occurs, which may decrease the molten iron temperature. In addition, the temperature dispersion in the circumferential direction in an item of which temperature can be measured in the circumferential direction of the furnace body as described above is caused by unevenness of the raw material in the circumferential direction and unevenness of the reduction reaction in the furnace and the gas flow. This may lead to deviation in the molten iron temperature between tap holes, which may lead to deterioration of the furnace condition.

The present invention has been made in view of the above, and an object of the present invention is to provide a molten iron temperature prediction method for a blast furnace, a learning method of a molten iron temperature prediction model for a blast furnace, an operation method for a blast furnace, a molten iron temperature prediction device for a blast furnace, a molten iron temperature prediction system, and a terminal device capable of predicting a rapid increase or a rapid decrease in the molten iron temperature using only a temperature distribution that can be measured in the circumferential direction of a furnace body.

### Solution to Problem

To solve the above-described problem and achieve the object, a molten iron temperature prediction method for a blast furnace according to the present invention is executed by a device configured by a computer, and includes: an image conversion processing step of converting temperature data of a furnace body into a two-dimensional image by an image conversion processing unit included in the computer; and a molten iron temperature prediction processing step of outputting, by a molten iron temperature prediction processing unit included in the computer, a future molten iron temperature by inputting image data output in the image conversion processing step for current temperature data of the furnace body to a molten iron temperature prediction model of which learning is performed using image data output in the image conversion processing step as input data and a molten iron temperature as output data.

Moreover, in the above-described molten iron temperature prediction method for a blast furnace according to the present invention, the temperature data of the furnace body includes at least one of a furnace top sonde temperature, a skin flow temperature, a cooling stave temperature and a tuyere-embedded temperature, and in the image conversion processing step, a temperature of the furnace body is two-dimensionally disposed in correspondence to a measurement position, and values of the temperature are converted into an image with different colors or tones.

Moreover, in the above-described molten iron temperature prediction method for a blast furnace according to the present invention, the input data includes a plurality of pieces of image data at predetermined time intervals and indicates a temporal change in a furnace body temperature distribution.

Moreover, in the above-described molten iron temperature prediction method for a blast furnace according to the present invention, the molten iron temperature prediction processing step predicts an absolute value of a difference of a molten iron temperature after a predetermined period of time with respect to an average value of molten iron temperatures in a most recent predetermined period of time.

To solve the above-described problem and achieve the object, a learning method of a molten iron temperature prediction model for a blast furnace is executed by a device configured by a computer and includes: an image conversion processing step of converting temperature data of a furnace body into a two-dimensional image by an image conversion processing unit included in the computer; and a model learning processing step of performing learning of the molten iron temperature prediction model by a model learning processing unit included in the computer using image data output in the image conversion processing step as input data and a molten iron temperature as output data.

Moreover, in the above-described learning method of a molten iron temperature prediction model for a blast furnace according to the present invention, the model learning processing step performs learning of the molten iron temperature prediction model by using image data indicating a plurality of furnace body temperature distributions in a predetermined period before a reference time as input data and a difference of a molten iron temperature after a predetermined period after the reference time from an average value of molten iron temperatures in the predetermined period before the reference time as output data.

To solve the above-described problem and achieve the object, an operation method of a blast furnace according to the present invention includes: predicting a molten iron temperature using the above-described molten iron temperature prediction method for a blast furnace; and changing an operating condition based on the predicted molten iron temperature.

To solve the above-described problem and achieve the object, a molten iron temperature prediction device for a blast furnace according to the present invention includes: an image conversion processing unit configured to convert temperature data of a furnace body into a two-dimensional image; and a molten iron temperature prediction processing unit configured to output a future molten iron temperature by inputting image data output by the image conversion processing unit for current temperature data of the furnace body to a molten iron temperature prediction model of which learning is performed using image data output by the image conversion processing unit as input data and a molten iron temperature as output data.

Moreover, in the above-described molten iron temperature prediction device for a blast furnace according to the present invention, the temperature data of the furnace body includes at least one of a furnace top sonde temperature, a skin flow temperature, a cooling stave temperature and a tuyere-embedded temperature, and the image conversion processing unit is configured to two-dimensionally dispose a temperature of the furnace body in correspondence to a measurement position and convert values of the temperature into an image with different colors or tones.

Moreover, in the above-described molten iron temperature prediction device for a blast furnace according to the present invention, the input data includes a plurality of pieces of image data at predetermined time intervals and indicates a temporal change in a furnace body temperature distribution.

Moreover, in the above-described molten iron temperature prediction device for a blast furnace according to the present invention, the molten iron temperature prediction processing unit is configured to predict an absolute value of a difference of a molten iron temperature after a predetermined period of time with respect to an average value of molten iron temperatures in a most recent predetermined period of time.

To solve the above-described problem and achieve the object, a molten iron temperature prediction system according to the present invention includes: a molten iron temperature predicting server device; and a terminal device, wherein the molten iron temperature predicting server device includes: an image conversion processing unit configured to convert temperature data of a furnace body into a two-dimensional image; a molten iron temperature prediction processing unit configured to output a future molten iron temperature by inputting image data output by the image conversion processing unit for current temperature data of the furnace body to a molten iron temperature prediction model of which learning is performed using image data output by the image conversion processing unit as input data and a molten iron temperature as output data; and an output unit configured to output information including at least a future molten iron temperature predicted by the molten iron temperature prediction processing unit to the terminal device, and the terminal device includes: an information acquisition unit configured to acquire information including at least a future molten iron temperature from the molten iron temperature predicting server device; and a display unit configured to display the information acquired by the information acquisition unit.

To solve the above-described problem and achieve the object, a terminal device according to the present invention includes: an information acquisition unit configured to acquire, from a molten iron temperature predicting server device, information including at least a future molten iron temperature predicted based on image data obtained by converting current temperature data of a furnace body into a two-dimensional image; and a display unit configured to display the information acquired by the information acquisition unit.

### Advantageous Effects of Invention

According to a molten iron temperature prediction method for a blast furnace, a learning method of a molten iron temperature prediction model for a blast furnace, an operation method for a blast furnace, a molten iron temperature prediction device for a blast furnace, a molten iron temperature prediction system, and a terminal device according to the present invention, it is possible to accurately predict a rapid rise or a rapid decrease in the molten iron temperature using only a measurable temperature distribution in a circumferential direction of a furnace body.

### Brief Description of Drawings

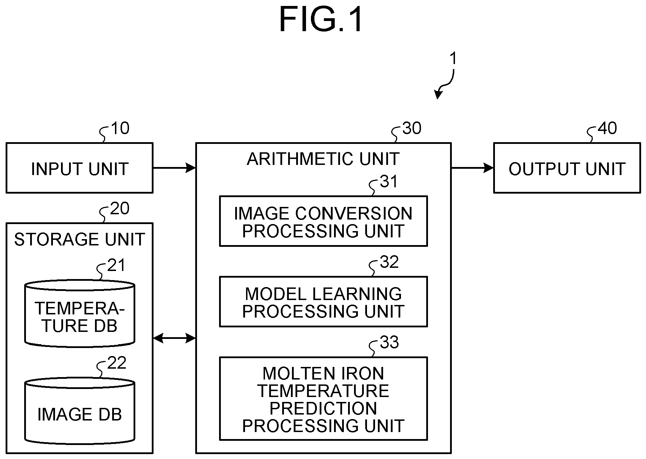

FIG. 1 is a diagram illustrating a schematic configuration of an information processing device for implementing a learning device of a molten iron temperature prediction model for a blast furnace and a molten iron temperature prediction device for a blast furnace according to an embodiment of the present invention.

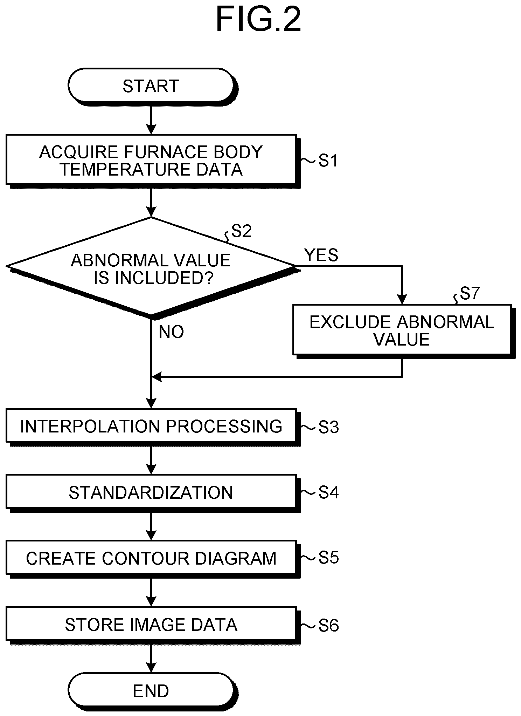

FIG. 2 is a flowchart illustrating a flow of an image conversion processing step in a learning method of a molten iron temperature prediction model for a blast furnace and a molten iron temperature prediction method for a blast furnace according to the embodiment of the present invention.

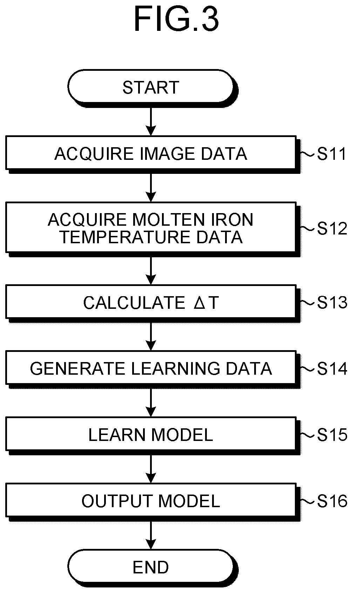

FIG. 3 is a flowchart illustrating a flow of a model learning processing step in the learning method of the molten iron temperature prediction model for a blast furnace according to the embodiment of the present invention.

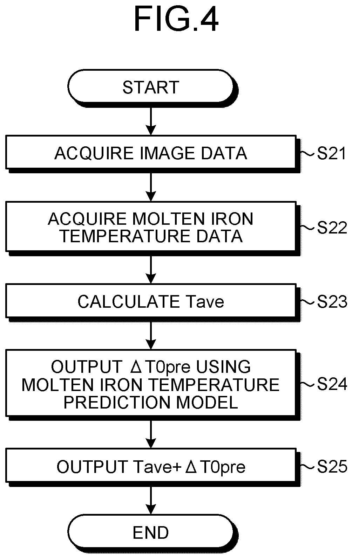

FIG. 4 is a flowchart illustrating a molten iron temperature prediction processing step in the molten iron temperature prediction method for a blast furnace according to the embodiment of the present invention.

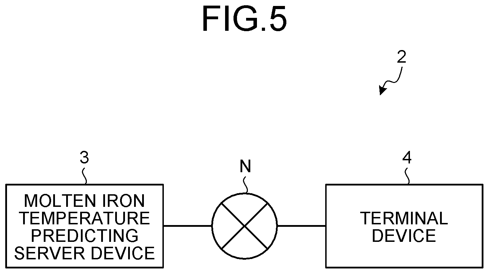

FIG. 5 is a diagram illustrating a schematic configuration of a molten iron temperature prediction system according to an embodiment of the present invention.

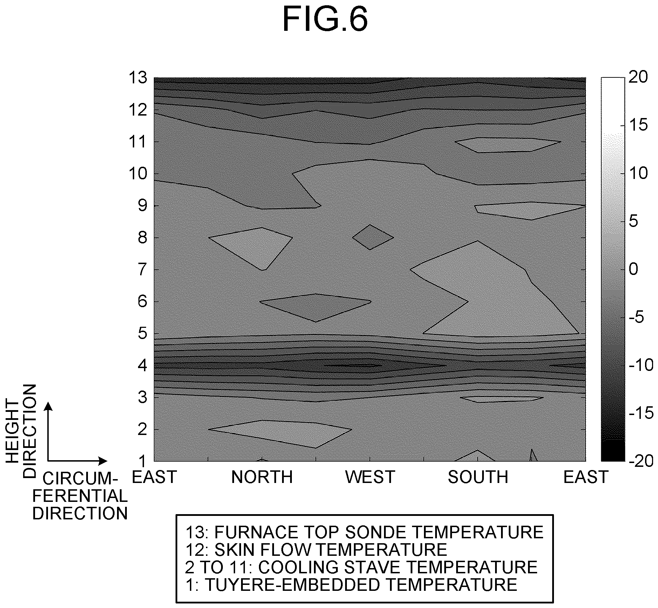

FIG. 6 is an example of the learning method of the molten iron temperature prediction model for a blast furnace and the molten iron temperature prediction method for a blast furnace according to the embodiment of the present invention and is a diagram illustrating an example of a contour diagram after image conversion processing is performed on temperature data of a furnace body.

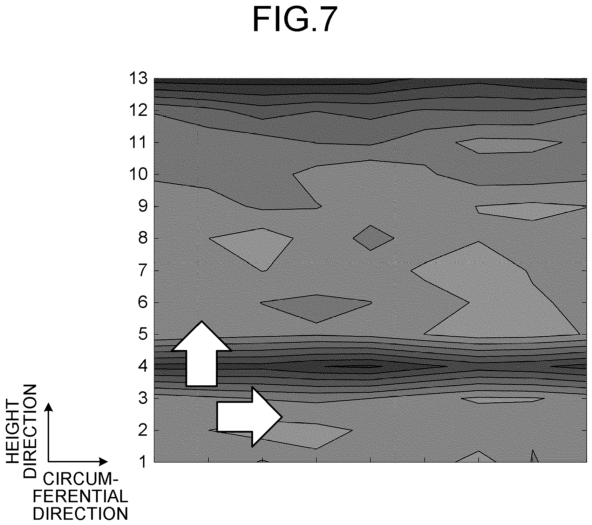

FIG. 7 is an example of the learning method of the molten iron temperature prediction model for a blast furnace and the molten iron temperature prediction method for a blast furnace according to the embodiment of the present invention and is a diagram for explaining a convolution operation direction of a CNN in the contour diagram of FIG. 6.

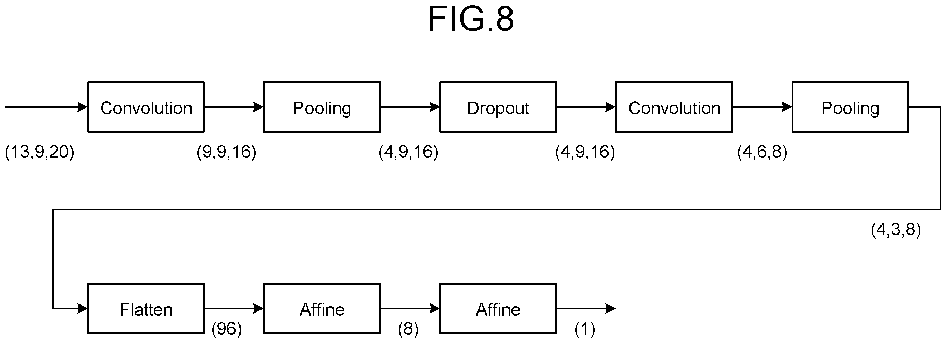

FIG. 8 is a block diagram illustrating an example of a structure of a CNN.

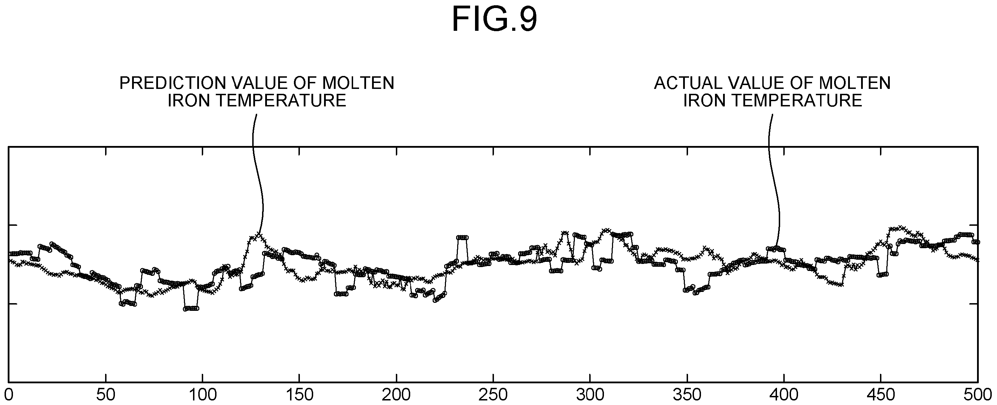

FIG. 9 is an example of the learning method of the molten iron temperature prediction model for a blast furnace and a molten iron temperature prediction method for a blast furnace according to the embodiments of the present invention, which illustrates trends in which prediction values and actual values of the molten iron temperature after eight hours in verification data are arranged in time series for every 30 minutes per step.

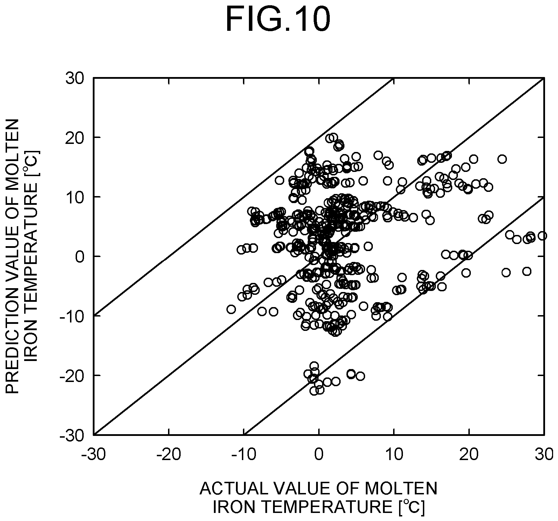

FIG. 10 is an example of the learning method of the molten iron temperature prediction model for a blast furnace and the molten iron temperature prediction method for a blast furnace according to the embodiments of the present invention and is a scatter diagram illustrating prediction values and actual values of the molten iron temperature after eight hours in terms of a difference from a molten iron temperature average value in the most recent 32 hours in verification data.

### Description of Embodiments

A learning device of a molten iron temperature prediction model for a blast furnace (hereinafter, referred to as a "model learning device"), a molten iron temperature prediction device for a blast furnace, a learning method of a molten iron temperature prediction model for a blast furnace (hereinafter, referred to as a "model learning method"), and a molten iron temperature prediction method for a blast furnace according to an embodiment of the present invention will be described with reference to the drawings. Note that the components in the following embodiments include those that can be easily replaced by those skilled in the art or those that are substantially the same.

### [Device Configuration]

Device configurations of a model learning device and a molten iron temperature prediction device according to an embodiment will be described with reference to FIG. 1. Illustrated in this drawing is an example of the configuration of an information processing device 1 for implementing the model learning device and the molten iron temperature prediction device according to an embodiment. The information processing device 1 is implemented by, for example, a general-purpose computer such as a workstation or a personal computer.

The information processing device 1 includes an input unit 10, a storage unit 20, an arithmetic unit 30, and an output unit 40. The model learning device according to the embodiment can be implemented by components excluding a molten iron temperature prediction processing unit 33 of the arithmetic unit 30 from components of the information processing device 1. In addition, the molten iron temperature prediction device according to the embodiment can be implemented by components excluding a model learning processing unit 32 of the arithmetic unit 30 from the components of the information processing device 1.

The input unit 10 is an input means to the arithmetic unit 30 and is implemented by an input device such as a keyboard, a mouse pointer, and a numeric keypad.

The storage unit 20 includes a recording medium such as an erasable programmable ROM (EPROM), a hard disk drive (HDD), and a removable medium. Examples of the removable medium include a universal serial bus (USB) memory and a disk recording medium such as a compact disc (CD), a digital versatile disc (DVD), or a Blu-ray (registered trademark) (BD) disc. The storage unit 20 can store an operating system (OS), various programs, various tables, various databases, and the like. The storage unit 20 stores a temperature database (DB) 21 and an image DB 22.

The temperature DB21 stores temperature data of the body of the blast furnace (hereinafter, referred to as "furnace body temperatures data"). Examples of the furnace body temperatures data include history data of at least one of the furnace top sonde temperature, the skin flow temperature, the cooling stave temperature and the tuyere-embedded temperature, history data of the molten iron temperature, and the like. In addition, the temperature DB21 is connected to the arithmetic unit 30 in a data-readable form.

The image DB 22 stores image data (for example, contour diagrams) having been subjected to image conversion processing from furnace body temperatures data in an image conversion processing unit 31 of the arithmetic unit 30. In addition, the image DB 22 is connected to the arithmetic unit 30 in a data-readable form.

The arithmetic unit 30 is implemented by, for example, a processor including a central processing unit (CPU) or the like and a memory (main storage unit) including a random access memory (RAM), a read only memory (ROM), or the like.

The arithmetic unit 30 implements a function matching a predetermined purpose by loading a program into a work area of the main storage unit and executing the program and controlling each component or the like through the execution of the program. The arithmetic unit 30 functions as the image conversion processing unit 31, the model learning processing unit 32, and the molten iron temperature prediction processing unit 33 through execution of the program described above. Although FIG. 1 illustrates an example in which the functions of the units are implemented by one computer (arithmetic unit), a specific implementation method of the functions of the units is not particularly limited, and for example, the functions of the units may be implemented by a plurality of computers.

The image conversion processing unit 31 performs an image conversion processing step of two-dimensionally imaging the furnace body temperatures data. For example, the image conversion processing unit 31 two-dimensionally arranges temperatures of the furnace body in correspondence with measurement positions and generates a contour diagram (see FIG. 6) by converting temperature values into an image with different colors or tones. Then, the image conversion processing unit 31 stores the generated image data (for example, contour diagram) in the image DB 22.

Note that the "furnace body temperatures data" is measured by thermometers installed in the circumferential direction of the body of the blast furnace. The furnace body temperatures data is measured in advance and stored in the temperature DB21. Meanwhile, the furnace body temperatures data includes, for example, at least one of the furnace top sonde temperature, the skin flow temperature, the cooling stave temperature and the tuyere-embedded temperature. As described above, in the present embodiment, learning of a prediction model is performed using a those having a high correlation with the molten iron temperature, such as the furnace top sonde temperature, the skin flow temperature, the cooling stave temperature, and the tuyere-embedded temperature among the temperatures that can be measured from the furnace body.

The model learning processing unit 32 learns the prediction model for predicting a future molten iron temperature with respect to the current temperature distribution of the furnace body. Specifically, the model learning processing unit 32 performs a model learning processing step of learning the molten iron temperature prediction model by using the image data output from the image conversion processing unit 31 as input data and using the molten iron temperature as output data. The model learning processing unit 32 learns the molten iron temperature prediction model by a machine learning method such as a convolutional neural network (CNN).

In this example, the image data stored in advance in the image DB 22 can be used as input data for learning of the molten iron temperature prediction model. This image data includes, for example, a plurality of pieces of image data (for example, contour diagrams) at predetermined time intervals and includes data indicating a temporal change in the furnace body temperature distribution.

The molten iron temperature prediction processing unit 33 predicts a future molten iron temperature with respect to a current temperature distribution of the furnace body. Specifically, the molten iron temperature prediction processing unit 33 performs a molten iron temperature prediction processing step of outputting a future molten iron temperature by inputting image data output by the image conversion processing unit 31 for current furnace body temperatures data to the molten iron temperature prediction model of which learning is performed by the model learning processing unit 32. The molten iron temperature prediction processing unit 33 predicts, for example, an absolute value of a difference of the molten iron temperature after a predetermined period of time with respect to an average value of the molten iron temperature in the most recent predetermined period of time.

That is, the molten iron temperature prediction processing unit 33 inputs the image data indicating the current temperature of the furnace body to the molten iron temperature prediction model to predict how much the molten iron temperature changes after a predetermined period of time. Note that the molten iron temperature prediction processing unit 33 may directly predict the molten iron temperature after a predetermined period of time by inputting the image data indicating the current temperature of the furnace body to the molten iron temperature prediction model.

Incidentally, image data stored in advance in the image DB 22 can be used as the input data for predicting the future molten iron temperature. This image data includes, for example, a plurality of pieces of image data (for example, contour diagrams) at predetermined time intervals and includes data indicating a temporal change in the furnace body temperature distribution.

The output unit 40 is an output means of data processed by the arithmetic unit 30 and is implemented by, for example, a display device such as an LCD display or a CRT display, a printing device such as a printer, or the like.

### [Model Learning Method]

A model learning method according to an embodiment will be described with reference to FIGS. 2 and 3. The model learning method is executed by the information processing device 1 configured by a computer. In addition, the model learning method performs the image conversion processing step by the image conversion processing unit 31 and the model learning processing step by the model learning processing unit 32. Note that it is not essential to perform the image conversion processing step before the model learning processing step, and for example, in a case where the image conversion processing step has been performed in advance, only the model learning processing step may be performed as the model learning method.

### (Image Conversion Processing Step)

FIG. 2 is a flowchart illustrating a specific flow of the image conversion processing step. The flowchart in the drawing starts at timing when an execution command of the image conversion processing is input to the model learning device (information processing device 1), and the image conversion processing proceeds to processing of step S1.

In the processing of step S1, the image conversion processing unit 31 acquires furnace body temperatures data from the temperature DB21. As a result, the processing of step S1 is completed, and the image conversion processing proceeds to processing of step S2.

In the processing of step S2, the image conversion processing unit 31 determines whether or not the furnace body temperatures data acquired in the processing of step S1 includes an abnormal value caused by a temperature measurement failure or the like. In the processing of step S2, if an abnormal value is observed in any sensor (Yes in step S2), observation values of this sensor are excluded (step S7), and the image conversion processing proceeds to the processing of step S3. Alternatively, if no abnormal value is observed in any sensor (No in step S2), the image conversion processing directly proceeds to the processing of step S3.

In the processing of step S3, the image conversion processing unit 31 performs interpolation processing in the circumferential direction of the furnace body on the furnace body temperatures data from which abnormal values have been removed as necessary in the processing of step S2. In this interpolation processing, for example, an estimation value is extracted for every 45° counterclockwise presuming that east is 0°.

The interpolation processing is necessary to equalize the number of points in the circumferential direction, which is the horizontal axis of the two-dimensional image data, in a case where the number of temperature measurement points in the circumferential direction is different for each sensor. However, in a sensor having a plurality of temperature measurement points in the radial direction, interpolation processing is performed for each temperature measurement point having the same distance from the center of the furnace body. In addition, for sensors having a plurality of temperature measurement points in the height direction of the furnace body, the interpolation processing is performed for each temperature measurement point having the same distance from the furnace top. As a result, the processing of step S3 is completed, and the image conversion processing proceeds to processing of step S4.

In the processing of step S4, the image conversion processing unit 31 performs standardization for aligning value ranges with respect to the estimation values of the furnace body temperature having been subjected to the interpolation processing in the processing of step S3. This standardization is performed, for example, by obtaining an average value and a standard deviation in the last 32 hours for each estimation value of the furnace body temperature. As a result, the processing of step S4 is completed, and the image conversion processing proceeds to processing of step S5.

In the processing of step S5, the image conversion processing unit 31 creates, for example, a contour diagram (see, for example, FIG. 6) in which the vertical axis is the height direction of the furnace body and the horizontal axis is the circumferential direction by using the data standardized in the processing of step S4. In this contour diagram, the furnace body temperature of the blast furnace is interpolated and imaged not only in the circumferential direction of the furnace body but also in the height direction of the furnace body. Therefore, creating and using such a contour diagram makes it possible to uniformly handle the entire furnace body temperature as an image, and there is an effect that a change in the furnace body temperature can be easily grasped. As a result, the processing of step S5 is completed, and the image conversion processing proceeds to processing of step S6.

In the processing of step S6, the image conversion processing unit 31 stores the image data (contour diagram) created in the processing of step S5 in the image DB 22. As a result, the processing of step S6 is completed, and a series of image conversion processing ends.

### (Model Learning Processing Step)

FIG. 3 is a flowchart illustrating a specific flow of the model learning processing step. The flowchart in the drawing starts at timing when an execution command of the model learning processing is input to the model learning device (information processing device 1), and the model learning processing proceeds to processing of step S11.

In the processing of step S11, the model learning processing unit 32 acquires image data from the image DB 22. As a result, the processing of step S11 is completed, and the model learning processing proceeds to processing of step S12.

In the processing of step S12, the model learning processing unit 32 acquires history data of the molten iron temperature from the temperature DB21. As a result, the processing of step S12 is completed, and the model learning processing proceeds to processing of step S13.

In the processing of step S13, the model learning processing unit 32 calculates a difference ΔT of the molten iron temperature at time t + β from an average value of the molten iron temperature from time t - α to time t with respect to the history data of the molten iron temperature acquired in step S12. Note that the values of α and β are determined in advance based on, for example, a time constant of the furnace body.

In determining α, it is preferable that the period has similar operation specifications such as the blast volume, the coke ratio, and the blowing moisture content. On the other hand, in the blast furnace, deviation in the molten iron temperature may occur between a plurality of tap holes due to the influence of dispersion of the gas flow and the temperature distribution in the circumferential direction in the furnace. Therefore, it is necessary to obtain an average value of the molten iron temperature for a long time. Therefore, α is preferably set to about one to three days. In addition, for determining β, it is necessary to have a value that allows an operational action to cope with a sudden change in molten iron temperature. The operation of the blowing moisture content has a quite immediate effect on the molten iron temperature; however, the retention time of the molten iron at the furnace bottom is about two hours. Therefore, β needs to be a value larger than 2. As a result, the processing of step S13 is completed, and the model learning processing proceeds to processing of step S14.

In the processing of step S13, the model learning processing unit 32 calculates a difference ΔT of the molten iron temperature at time t + β from an average value of the molten iron temperature from time t - α to time t with respect to the history data of the molten iron temperature acquired in step S12. Note that the values of α and β are determined in advance based on, for example, a time constant of the furnace body. As a result, the processing of step S13 is completed, and the model learning processing proceeds to processing of step S14.

In the processing of step S14, the model learning processing unit 32 generates learning data in which image data from time t - γ to the time t out of the image data acquired in step S11 is associated with ΔT calculated in step 13. The value of γ is determined in advance based on, for example, a time constant or the like of the furnace body. In the case of "γ = 0", only the image data at the time t is used, but in order to learn the temporal change of the furnace body temperature distribution, it is preferable to set γ to a value larger than 0 and that machine learning be performed by associating image data at a plurality of consecutive times. In determining γ, the time until the raw material charged from the furnace top falls to the tuyere may be used as a reference. As a result, the processing of step S14 is completed, and the model learning processing proceeds to processing of step S15.

In the processing of step S15, the model learning processing unit 32 performs machine learning of the molten iron temperature prediction model using the learning data generated in the processing of step S14. This molten iron temperature prediction model is to predict a future molten iron temperature from the temporal change of the furnace body temperature distribution by using image data, which is obtained by converting a temporal change in the furnace body temperature distribution from the time t - γ to the time t into an image, as input data and a difference ΔT of the molten iron temperature at the time t + β from an average value of the molten iron temperature from the time t - α to the time t as output data.

Incidentally, the molten iron temperature prediction model generated by machine learning is preferably a convolutional neural network (CNN). The convolution operation of the CNN is preferably performed in the vertical axis direction and the horizontal axis direction of the image data, namely, in the height direction and the circumferential direction of the furnace body (see FIG. 7). As a result, the processing of step S15 is completed, and the model learning processing proceeds to processing of step S16.

In the processing of step S16, the model learning processing unit 32 outputs the molten iron temperature prediction model generated in the processing of step S15. As a result, the processing of step S16 is completed, and a series of model learning processing ends.

Note that, in a case where new temperature data is added to the temperature DB21, the image conversion processing unit 31, for example, converts the newly added furnace body temperatures data into an image and additionally stores the image in the image DB 22. Then, the model learning processing unit 32 preferably updates the model by causing the molten iron temperature prediction model to perform additional learning using the newly added image data as data for additional learning.

### [Molten Iron Temperature Prediction Method]

The molten iron temperature prediction method according to the embodiment will be described with reference to FIG. 4. The molten iron temperature prediction method is executed by the information processing device 1 configured by a computer. In the molten iron temperature prediction method, the molten iron temperature prediction processing step is performed by the molten iron temperature prediction processing unit 33. In addition, in the molten iron temperature prediction method, the image conversion processing step (see FIG. 2) by the image conversion processing unit 31 may be performed before the molten iron temperature prediction processing step as necessary.

### (Molten Iron Temperature Prediction Processing Step)

FIG. 4 is a flowchart illustrating a specific flow of the molten iron temperature prediction processing step. The flowchart of the drawing is started at timing when an execution command of the molten iron temperature prediction processing is input to the molten iron temperature prediction device (information processing device 1), and the molten iron temperature prediction processing proceeds to the processing of step S21.

In the processing of step S21, the molten iron temperature prediction processing unit 33 acquires image data from time t0 - γ to time t0 from the image DB 22 where t0 denotes the current time. As a result, the processing of step S21 is completed, and the molten iron temperature prediction processing proceeds to processing of step S22.

In the processing of step S22, the molten iron temperature prediction processing unit 33 acquires history data of the molten iron temperature from time t0 - α to the time t0 from the temperature DB21. As a result, the processing of step S22 is completed, and the molten iron temperature prediction processing proceeds to processing of step S23.

In the processing of step S23, the molten iron temperature prediction processing unit 33 calculates an average value Tave of the molten iron temperature from the time t0 - α to the time t0. As a result, the processing of step S23 is completed, and the molten iron temperature prediction processing proceeds to processing of step S24.

In the processing of step S24, the molten iron temperature prediction processing unit 33 outputs a difference ΔT0pre of the molten iron temperature at time t0 + β with respect to the average value Tave of the molten iron temperature from the time t0 - α to the time t0 using the molten iron temperature prediction model output by the model learning processing unit 32 and using the image data, obtained by converting the temporal change of the furnace body temperature distribution from the time t0 - γ to the time t0 into an image, as input data. As a result, the processing of step S24 is completed, and the molten iron temperature prediction processing proceeds to processing of step S25.

In the processing of step S25, the molten iron temperature prediction processing unit 33 outputs the prediction value of the molten iron temperature at the time t0 + β as Tave + ΔT0pre. As a result, the processing of step S25 is completed, and a series of molten iron temperature prediction processing ends.

### [Operation Method of Blast Furnace]

The operation method of a blast furnace according to the embodiment is executed by, for example, a device configured by a computer. In the operation method of a blast furnace, a molten iron temperature prediction processing step of predicting a molten iron temperature using the above-described molten iron temperature prediction method and an operating condition changing step of changing operating conditions based on the molten iron temperature predicted in the molten iron temperature prediction processing step are performed. For example, in a case where the prediction value of the molten iron temperature at t0 + β significantly decreases with respect to a target value of the molten iron temperature, it is preferable to lower the blowing moisture content to a lower limit value or to significantly increase the coke ratio at the furnace top.

### [Molten Iron Temperature Prediction System]

As illustrated in FIG. 5, a molten iron temperature prediction system 2 according to an embodiment includes a molten iron temperature predicting server device 3 and a terminal device 4. The molten iron temperature predicting server device 3 and the terminal device 4 are configured to be communicable through a network N such as an Internet network. In the molten iron temperature prediction system 2, the terminal device 4 is disposed, for example, in an iron mill.

The molten iron temperature predicting server device 3 is implemented by, for example, a server installed on a cloud. The molten iron temperature predicting server device 3 is a network-compatible server device of the molten iron temperature prediction device implemented by the information processing device 1 illustrated in FIG. 1 and has a configuration similar to that of the molten iron temperature prediction device. That is, the molten iron temperature predicting server device 3 includes at least an arithmetic unit, which functions as the image conversion processing unit and the molten iron temperature prediction processing unit among the components of the information processing device 1, and an output unit.

The image conversion processing unit of the molten iron temperature predicting server device 3 converts temperature data of the furnace body into a two-dimensional image. In addition, the molten iron temperature prediction processing unit of the molten iron temperature predicting server device 3 outputs the future molten iron temperature by inputting the image data output from the image conversion processing unit for the current temperature data of the furnace body to the molten iron temperature prediction model. The output unit of the molten iron temperature predicting server device 3 outputs information including at least the future molten iron temperature predicted by the molten iron temperature prediction processing unit to the terminal device 4 via the network N. Note that the molten iron temperature prediction model is a model of which learning is performed by using the image data output from the image conversion processing unit as input data and the molten iron temperature as output data.

The terminal device 4 acquires various types of information from the molten iron temperature predicting server device 3 through the network N and displays the information. The terminal device 4 is implemented by, for example, a general-purpose computer such as a personal computer or a mobile information processing device such as a tablet computer. The terminal device 4 also includes an arithmetic unit that functions as an information acquisition unit and a display unit. Furthermore, an external display such as a liquid crystal display (LCD), an organic EL display (OLED), or a touch panel display is connected to the terminal device 4.

The information acquisition unit of the terminal device 4 acquires, from the molten iron temperature predicting server device 3, information including at least the future molten iron temperature predicted by the molten iron temperature predicting server device 3. This future molten iron temperature is predicted based on the image data obtained by converting the current temperature data of the furnace body into a two-dimensional image. In addition, examples of the information acquired from the molten iron temperature predicting server device 3 include, in addition to the future molten iron temperature, furnace body temperatures data stored in the temperature DB21, image data (for example, contour diagram) generated in the image conversion processing unit 31, and the like. Then, the display unit of the terminal device 4 displays these pieces of information acquired by the information acquisition unit on the external display.

According to the molten iron temperature prediction method for a blast furnace, the learning method of the molten iron temperature prediction model for a blast furnace, the operation method for a blast furnace, the molten iron temperature prediction device for a blast furnace, the molten iron temperature prediction system, and the terminal device according to the embodiments described above, it is possible to accurately predict a rapid rise or a rapid decrease in the molten iron temperature using only a measurable temperature distribution in the circumferential direction of the furnace body such as the furnace top sonde temperature, the skin flow temperature, the cooling stave temperature, and the tuyere-embedded temperature.

### [Example]

An example of the model learning method and the molten iron temperature prediction method according to the embodiments will be described with reference to FIGS. 6 to 10.

In the present example, as for the coefficients α, β, and γ (see steps S13 and S14 in FIG. 3) in the model learning processing, α was set to 32 hours, β was set to eight hours, and γ was set to ten hours. Meanwhile, the furnace body temperatures data acquired at a cycle of 30 minutes was used. That is, by using 20 pieces of image data of the furnace body temperature distribution as input data, features were extracted by the CNN from the temperature change for the last ten hours.

In addition, in this example, image data of the furnace body temperature distribution was created using history data of the furnace top sonde temperature, the skin flow temperature, the cooling stave temperature, and the tuyere-embedded temperature. Since the furnace top sonde temperature has more noise as it is closer to the center, only measurement points having the maximum distance from the center of the furnace body were used. As the cooling stave temperature, measurement points for ten stages in the furnace height direction were used.

A contour diagram is illustrated in FIG. 6 which is obtained after interpolation processing and standardization are performed with the furnace top sonde temperature 13, the skin flow temperature 12, the cooling stave temperature 2 to 11, and the tuyere-embedded temperature 1 in ascending order of the distance from the furnace top. The vertical axis in the drawing is the height direction of the furnace body. In addition, the horizontal axis in the drawing indicates the circumferential direction of the furnace body, that is, the direction, and the left end and the right end indicate east.

Subsequently, 20500 data sets (for about 600 days) were created in which the created image data is associated with data of the difference ΔT in the molten iron temperature after eight hours from an average value of the molten iron temperature in the last 32 hours. Subsequently, machine learning of the molten iron temperature prediction model by the CNN was performed with first 20,000 points, and the accuracy of the molten iron temperature prediction model was verified with the remaining 500 points.

In the CNN, as indicated by arrows in FIG. 7, convolution operations are performed in the vertical axis direction (height direction of the furnace body) and the horizontal axis direction (circumferential direction of the furnace body). The structure of the CNN used in the machine learning is illustrated in FIG. 8. Blocks in the drawing indicate a convolution layer (Convolution), a pooling layer (Pooling), a dropout layer (Dropout), a convolution layer (Convolution), a pooling layer (Pooling), flattening (Flatten), a fully-connected layer (Affine), and a fully-connected layer (Affine). Meanwhile, a number in parentheses in the figure indicates the size of the data array. For example, "(13, 9, 20)" indicates a three-dimensional array of "13 in length × 9 in breadth× number of channels 20". However, the structure of the CNN illustrated in the drawing is an example, and a structure other than the structure illustrated in the drawing may be used.

The verification results in the present example are illustrated in FIGS. 9 and 10. Illustrated in FIG. 9 are trends in which the prediction values and the actual values of the molten iron temperature after eight hours in the verification data are arranged in time series for every 30 minutes per step. A plot of "x" in the drawing indicates a prediction value of the molten iron temperature, and a plot of "o" indicates an actual value of the molten iron temperature.

FIG. 10 is a scatter diagram of the prediction values and the actual values of the molten iron temperature after eight hours with respect to the difference from the average molten iron temperature in the last 32 hours. As illustrated in FIG. 9, the trends of the prediction values and the actual values of the molten iron temperature coincide with each other. In addition, the cases where the difference between the prediction value and the actual value is within ±20°C make up 96.4%, and the root mean square error is 10.2°C, which confirms that the prediction accuracy is good.

The molten iron temperature prediction method for a blast furnace, the learning method of the molten iron temperature prediction model for a blast furnace, the operation method for a blast furnace, the molten iron temperature prediction device for a blast furnace, the molten iron temperature prediction system, and the terminal device according to the present invention have been specifically described with reference to the embodiments and the example for carrying out the invention; however, the gist of the present invention is not limited to these pieces of description but should be widely interpreted based on the description of claims. It goes without saying that various modifications, variations, and the like based on the description are also included in the gist of the present invention.

### Reference Signs List

1 INFORMATION PROCESSING DEVICE
10 INPUT UNIT
20 STORAGE UNIT
21 TEMPERATURE DB
22 IMAGE DB
30 ARITHMETIC UNIT
31 IMAGE CONVERSION PROCESSING UNIT
32 MODEL LEARNING PROCESSING UNIT
33 MOLTEN IRON TEMPERATURE PREDICTION PROCESSING UNIT
40 OUTPUT UNIT
2 MOLTEN IRON TEMPERATURE PREDICTION SYSTEM
3 MOLTEN IRON TEMPERATURE PREDICTING SERVER DEVICE
4 TERMINAL DEVICE
N NETWORK

## Claims

1. A molten iron temperature prediction method for a blast furnace executed by a device configured by a computer, the molten iron temperature prediction method comprising:
an image conversion processing step of converting temperature data of a furnace body into a two-dimensional image by an image conversion processing unit included in the computer; and
a molten iron temperature prediction processing step of outputting, by a molten iron temperature prediction processing unit included in the computer, a future molten iron temperature by inputting image data output in the image conversion processing step for current temperature data of the furnace body to a molten iron temperature prediction model of which learning is performed using image data output in the image conversion processing step as input data and a molten iron temperature as output data.

2. The molten iron temperature prediction method for a blast furnace according to claim 1, wherein
the temperature data of the furnace body includes at least one of a furnace top sonde temperature, a skin flow temperature, a cooling stave temperature and a tuyere-embedded temperature, and
in the image conversion processing step, a temperature of the furnace body is two-dimensionally disposed in correspondence to a measurement position, and values of the temperature are converted into an image with different colors or tones.

3. The molten iron temperature prediction method for a blast furnace according to claim 1 or 2, wherein the input data includes a plurality of pieces of image data at predetermined time intervals and indicates a temporal change in a furnace body temperature distribution.

4. The molten iron temperature prediction method for a blast furnace according to any one of claims 1 to 3, wherein the molten iron temperature prediction processing step predicts an absolute value of a difference of a molten iron temperature after a predetermined period of time with respect to an average value of molten iron temperatures in a most recent predetermined period of time.

5. A learning method of a molten iron temperature prediction model for a blast furnace executed by a device configured by a computer, the method comprising:
an image conversion processing step of converting temperature data of a furnace body into a two-dimensional image by an image conversion processing unit included in the computer; and
a model learning processing step of performing learning of the molten iron temperature prediction model by a model learning processing unit included in the computer using image data output in the image conversion processing step as input data and a molten iron temperature as output data.

6. The learning method of a molten iron temperature prediction model for a blast furnace according to claim 5, wherein the model learning processing step performs learning of the molten iron temperature prediction model by using image data indicating a plurality of furnace body temperature distributions in a predetermined period before a reference time as input data and a difference of a molten iron temperature after a predetermined period after the reference time from an average value of molten iron temperatures in the predetermined period before the reference time as output data.

7. An operation method of a blast furnace, the method comprising:
predicting a molten iron temperature using the molten iron temperature prediction method for a blast furnace according to any one of claims 1 to 4; and
changing an operating condition based on the predicted molten iron temperature.

8. A molten iron temperature prediction device for a blast furnace, the molten iron temperature prediction device comprising:
an image conversion processing unit configured to convert temperature data of a furnace body into a two-dimensional image; and
a molten iron temperature prediction processing unit configured to output a future molten iron temperature by inputting image data output by the image conversion processing unit for current temperature data of the furnace body to a molten iron temperature prediction model of which learning is performed using image data output by the image conversion processing unit as input data and a molten iron temperature as output data.

9. The molten iron temperature prediction device for a blast furnace according to claim 8, wherein
the temperature data of the furnace body includes at least one of a furnace top sonde temperature, a skin flow temperature, a cooling stave temperature and a tuyere-embedded temperature, and
the image conversion processing unit is configured to two-dimensionally dispose a temperature of the furnace body in correspondence to a measurement position and convert values of the temperature into an image with different colors or tones.

10. The molten iron temperature prediction device for a blast furnace according to claim 8 or 9, wherein the input data includes a plurality of pieces of image data at predetermined time intervals and indicates a temporal change in a furnace body temperature distribution.

11. The molten iron temperature prediction device for a blast furnace according to any one of claims 8 to 10, wherein the molten iron temperature prediction processing unit is configured to predict an absolute value of a difference of a molten iron temperature after a predetermined period of time with respect to an average value of molten iron temperatures in a most recent predetermined period of time.

12. A molten iron temperature prediction system comprising:
a molten iron temperature predicting server device; and
a terminal device, wherein
the molten iron temperature predicting server device includes:
an image conversion processing unit configured to convert temperature data of a furnace body into a two-dimensional image;
a molten iron temperature prediction processing unit configured to output a future molten iron temperature by inputting image data output by the image conversion processing unit for current temperature data of the furnace body to a molten iron temperature prediction model of which learning is performed using image data output by the image conversion processing unit as input data and a molten iron temperature as output data; and
an output unit configured to output information including at least a future molten iron temperature predicted by the molten iron temperature prediction processing unit to the terminal device, and
the terminal device includes:
an information acquisition unit configured to acquire information including at least a future molten iron temperature from the molten iron temperature predicting server device; and
a display unit configured to display the information acquired by the information acquisition unit.

13. A terminal device comprising:
an information acquisition unit configured to acquire, from a molten iron temperature predicting server device, information including at least a future molten iron temperature predicted based on image data obtained by converting current temperature data of a furnace body into a two-dimensional image; and
a display unit configured to display the information acquired by the information acquisition unit.
